# EUROPEAN PATENT APPLICATION

(11) **EP 4 379 618 A1**
(43) Date of publication of application: **05.06.2024**
(21) Application number: 22216542.5
(22) Date of filing: 23.12.2022
(51) Int. Cl.: G06N 20/00, G06F 16/215

(54) **COMPUTER IMPLEMENTED METHOD FOR DETERMINING A QUALITY RESULT FOR INPUT DATA OF A DATA MODEL**

(30) Priority: 29.11.2022 EP 22210276
(71) Applicant: ABB SCHWEIZ AG, 5400 Baden (CH)
(72) Inventor: DIX, Marcel, 78476 Allensbach (DE); ABUKWAIK, Hadil, 69469 Weinheim (DE); KLOEPPER, Benjamin, 68199 Mannheim (DE); BORRISON, Reuben, 68723 Schwetzingen (DE); SHARMA, Divyasheel, 560048 Bangalore (IN); SARKAR, Santonu, 560076 Bangalore (IN); MADUSKAR, Deepti, 462042 Bhopal (IN); PLATENIUS-MOHR, Marie, 69493 Hirschberg an der Bergstraße (DE); K R, Chandrika, 560078 Bangalore (IN)
(74) Representative: Maiwald GmbH

(57) **Abstract**

Computer implemented method for determining a quality result for input data of a data model, comprising: providing, by a processor, a data mode I trained to describe a relation between input data and output data (S100); determining, by the processor, at least one quality threshold for at least one quality parameter for at least one input parameter of the input data (S200); obtaining, by the processor, input data for the data model, wherein the input data comprises the at least one input parameter (S300); determining, by the processor, at least one quality value for the at least one quality parameter for the at least one input parameter of the input data (S400); comparing, by the processor, the determined at least one quality value with the determined at least one quality threshold and deriving a quality result (S500); providing the quality result (S600).

## Description

### FIELD OF INVENTION

The invention relates to a computer implemented method for determining a quality result for input data of a data model, to a device for determining a quality result for input data of a data model, to a computer program and to a computer readable medium.

### BACKGROUND OF THE INVENTION

Data models are known from the state of the art. Data models describe e.g. any area of industry or environment. Data models in general describe a relation between input parameters and output parameters. Data models are used among others to predict a behavior of a system or to control a behavior of a system.

It has now become apparent that there is a further need to provide a method for increasing a performance of a data model.

### SUMMARY OF THE INVENTION

In view of the above, it is an object of the present invention to provide a method that allows for improving performance of a data model.

These and other objects, which become apparent upon reading the following description, are solved by the subject matter of the independent claims. The invention provides a method, device, computer program and computer readable medium according to the independent claims. The dependent claims refer to preferred embodiments of the invention.

The inventors found that the performance of data models suffers quality issues of the available input data. The present disclosure, in particular, starting from this finding, provides a method that allows for improved performance by providing a method for determining a quality result for input data of a data model.

In one aspect of the present disclosure a computer implemented method for determining a quality result for input data of a data model is provided, comprising:
providing, by a processor, a data model trained to describe a relation between input data and output data;
determining, by the processor, at least one quality threshold for at least one quality parameter for at least one input parameter of the input data;
obtaining, by the processor, input data for the data model, wherein the input data comprises the at least one input parameter;
determining, by the processor, at least one quality value for the at least one quality parameter for the at least one input parameter of the input data;
comparing, by the processor, the determined at least one quality value with the determined at least one quality threshold and deriving a quality result;
providing the quality result.

The term quality result, as used herein, is to be understood broadly and may relate to an assessment of quality values of quality parameters of input parameters of the input data with quality thresholds. The quality result may comprise a quality value, a corresponding quality threshold, warning data, a metric (e.g. good, average, bad or the like).

The term input data, as used herein, is to be understood broadly and may relate to any input data of a data model. E.g., input data may be configured for use as input for the data model allowing the data model to make predictions, particularly to output output data, based on the input data. The input data may comprise one input parameter or a plurality of input parameters and optionally corresponding metadata, i.e. metadata corresponding to the input parameter or input parameters.

The term input parameter, as used herein, is to be understood broadly and may relate to any parameters configured to be input into a data model describing a relation between input parameter and output parameters. The input parameter may comprise sensor data of a physical process, such as an industrial process, or parameters derived from the sensor data. The sensor data may be obtained from a temperature sensor or a humidity sensor. The input parameter may comprise control data from a process such as runtimes and/or start times and/or stop times of machines (e.g. machine tool).

The term quality parameter, as used herein, is to be understood broadly and may relate to any parameter describing a quality of an input parameter. The quality parameter may comprise accuracy, reliability, relevance and timeliness. Quality of an input parameter may particularly entail the quality of values of the input parameter received at a given time or in a given time period.

The term data model, as used herein, is to be understood broadly and may relate to a model trained to describe a relation between input data and output data. The data model may be a model that has been trained with training data in a training phase to describe this relation. The data model may be a machine learning model. The machine learning model preferably may comprise decision trees, naive bayes classifications, nearest neighbors, neural networks, convolutional neural networks, generative adversarial networks, support vector machines, linear regression, logistic regression, random forest and/or gradient boosting algorithms.

The term quality threshold, as used herein, is to be understood broadly and may relate to one or more thresholds of a quality value of a quality parameter. The quality threshold may e.g. be 90% for the quality parameter completeness. The quality value may be determined by analyzing the data set of the input regarding the quality parameter using data quality metrics and data quality analyzing algorithms. There are various ways for determining/analyzing/measuring the quality of the input data. For example, determining quality of the input data may comprise measuring completeness. This may comprise performing (simple) tests such as counting NaN, values that stay constant over time, etc. Determining quality of the input data may comprise detecting outliers. To do so, one can use Hempel outlier. Determining quality of the input data may comprise detecting change in the data distributions. To detect change in the data distributions, one can perform KS-test (Kolmogorov-Smirnov test), Mann-Whitney U tests. Determining quality of the input data may comprise detecting noise. There are different ways to detect noise in data such as autocorrelations, e.g. to see if they are zero with all the lags, LoF (local outlier factor) method, Loop outlier method, or model-based methods like autoencoders in data. Determining quality of the input data may comprise analyzing an amount of data quality issues in the data. This may comprise counting missing values, outliers, frozen values, dead signals.

The term output data, as used herein, is to be understood broadly and may relate to any output data of a data model. E.g., output data may be a prediction of the data model, particularly based on the input data. The output data may comprise one output parameter or a plurality of output parameters and corresponding metadata, i.e. metadata corresponding to the output parameter or output parameters.

The term output parameter, as used herein, is to be understood broadly and may relate to a state of a process or a system described by the data model (e.g. stable or unstable), to a KPI of a process which is described by the model, to an extension of a machine part due to a temperature shift or to any other possible result which is described by the data model.

The term comparing, as used herein, is to be understood broadly and may relate to assessing the determined quality value in relation to the determined quality threshold. This may comprise analyzing whether the quality value exceeds, matches or falls below the quality threshold but is not limited to such a comparison.

Providing the quality result may comprise that the quality result is e.g. displayed to a user, e.g. a person responsible for a system monitored or controlled with the data model. The quality result may be provided in the form of a table, a figure or a graph, for example. The quality result may be sent to a portable device (e.g. mobile phone, tablet etc.) of a user (e.g. person responsible for process or system).

As mentioned above, the claimed solution makes use of the finding that the reliability of a prediction of a data model depends on the quality of the input data. Input data with bad quality may lead to a bad prediction. Therefore, a quality threshold of a quality parameter of an input parameter is defined or determined.

The invention proposes to determine the quality threshold for each unique trained data model after the training phase of the data model. In this manner a model specific threshold can be determined.

The determining of the quality threshold may comprise a sensitivity analysis of the trained model. This advantageously allows a more accurate determination of the possible and necessary threshold, as for example also a completeness of 50% as quality value of an input parameter may be sufficient to reliably predict output data of a trained data model or on the other side even a completeness of 98% may not be sufficient to reliably predict output data. The determining of the quality threshold according to the present disclosure may advantageously lead to a performance increase of the trained data model. The method may lead to improved reliability of the underlying system. The method may also allow for a root cause analysis of model performance reduction in operations. The determining may advantageously decrease process costs, as requirements to data acquisition may decrease. The determining may increase the reliability of a data model.

In other words the basic idea of the invention may entail proposing a machine learning pipeline for data quality monitoring that puts data quality monitoring into the context of the data model, e.g. machine learning model, where this data is used, e.g. into the context of the trained model being in used for a given application. This may be achieved by measuring the sensitivity of the data model, e.g. machine learning model, to data quality issues during and/or after training of the model. Then, during model application, the data quality can be measured with help of data quality metrics. In principle, data quality measurements can be performed by methods of the state of art. When changes in the data quality (DQ) are determined, an alert to the user is only raised if these DQ changes are larger than what the data model can accept, based on the sensitivity analysis that was done during data model training.

In an aspect of the present disclosure, determining the at least one quality threshold may comprise a sensitivity analysis of the data model regarding the at least one quality parameter. The term sensitivity analysis, as used herein, is to be understood broadly and may relate to an analysis of a change of a quality parameter of an input parameter and to an analysis of a corresponding change of a value or result of an output parameter, wherein the sensitivity analysis may particularly be performed with the trained data model after the training is finished, e.g. by using test data. This may advantageously increase a performance of the data model and a reliability of the data model. The sensitivity analysis may alternatively or in addition be performed during the training phase of the data model and may thereby generate a plurality of thresholds for different phases of training the data model. This may advantageously increase the performance of the data model.

In an aspect of the present disclosure, determining the at least one quality threshold may comprise intentionally changing a quality value of the at least one quality parameter of the at least one input parameter of the input data and determining an effect of the intentionally changing on a performance metric of the data model based on at least one output parameter of the output data. The term intentionally changing, as used herein, may relate to a structured analysis of the sensitivity of the data model and therefore advantageously to precise thresholds. Determining the at least one quality threshold may also comprise intentionally changing a plurality of quality values of a plurality of quality parameters. This may advantageously cover an effect of interactions between the two or more quality parameters of one or more input parameters on the performance metric. The term performance metric, as used herein, is to be understood broadly and may relate to an accuracy of the prediction of the data model.

In an aspect of the present disclosure, intentionally changing a quality value may be based on an algorithm configured to adapt values of the at least one input parameter in order to set a certain quality value of the at least one quality parameter of the at least one input parameter of the input data. The algorithm may change values of the input parameter, e.g. may delete single values of an ideal data set of the input parameter in order to adapt the quality value for the quality parameter. As an example, deleting values may reduce the value of the quality parameter "completeness". The algorithm may also add noise to an ideal data set of the input parameter in order to adapt the quality value for the quality parameter. The algorithm may also add one or more outliers to an ideal data set of an input parameter in order to adapt the quality value for the quality parameter. The algorithm may preferably do this in an automated manner.

In an aspect of the present disclosure, the at least one quality parameter may be one of completeness, accuracy, reliability, relevance and timeliness.

In an aspect of the present disclosure, the method may further comprise providing, by the processor, an alert in case the at least one determined quality value is below the at least one quality threshold. The alert may be provided to a user, e.g. a user responsible for a system controlled or monitored by the data model. The user may advantageously be informed that the reliability of the data model decreases and optionally that measures have to be taken. Such measures may comprise, for example, stopping the industrial process or running an analysis to determine the cause for the decrease and/or an analysis to determine the state of the industrial process.

In an aspect of the present disclosure, the method may further comprise determining, by the processor, by utilizing the data model and the obtained input data, output data. This may advantageously enable a reliable operation of a system monitored or controlled by the data model. The method may be used for, particularly comprise, operating and/or controlling a system or process, i.e., not only for monitoring quality issues concerning input data.

In an aspect of the present disclosure, the quality result may comprise the at least one determined quality value and the at least one determined quality threshold. This may advantageously enable a user to understand a present quality issue and to take further measures.

In an aspect of the present disclosure, the at least one quality parameter may comprise two or more quality thresholds. This may be advantageous in case a quality parameter of an input parameter comprises different ranges of quality values that are not connected to each other and nevertheless provide reliable results for the data model. This may increase the usability of the data model.

In an aspect of the present disclosure, the input data may comprise a plurality of input parameters. This may advantageously enable the use of the method for data models with an arbitrary number of input parameters and therefore with an arbitrary complexity.

In an aspect of the present disclosure, the input data may comprise physical data relating to the environment of an industrial process. The physical data may be from a sensor or the like. The data model may be used to control a machine (e.g. a machine tool). The data model may be used to describe a process, e.g. an industrial process, such as a power plant process. In other words the output parameter of the data model may be used to control and/or monitor a machine or a plant.

In an aspect of the present disclosure, the method may further comprise adding a further quality parameter for the at least one input parameter of the input data and determining a corresponding quality threshold for the quality parameter. This may enable a user to react on new quality issues which arise after a first implementation of the method. It may, alternatively or in addition allow for different technical needs to be met, e.g., when the data model is to be trained and used for different applications, such as in different industrial processes or plants. This may advantageously increase a flexibility of the method to changing environmental circumstances.

A further aspect relates to a device for determining a quality result for input data of a data model, comprising: means for carrying out the steps of the method described above. The means may use hardware, software, and/or a combination thereof. For example, hardware devices may be implemented using processing circuitry such as, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, or any other device capable of responding to and executing instructions in a defined manner.

Means may include one or more interface circuits. In some examples, the interface circuits may include wired or wireless interfaces that are connected to a local area network (LAN), the Internet, a wide area network (WAN), or combinations thereof. The functionality of any given device or unit of the present disclosure may be distributed among multiple units or devices that are connected via interface circuits.

Means may also include one or more storage devices. The one or more storage devices may be tangible or non-transitory computer-readable storage media, such as random access memory (RAM), read only memory (ROM), a permanent mass storage device (such as a disk drive), solid state (e.g., NAND flash) device, and/or any other like data storage mechanism capable of storing and recording data. The one or more storage devices may be configured to store computer programs, program code, instructions, or some combination thereof.

A further aspect relates to a computer program comprising instructions that, when carried out by a computer, cause the computer to carry out the method as described above.

A last aspect relates to a computer readable medium having stored thereon instructions that, when carried out by a computer, cause the computer to carry out the method as described above.

### Further aspects of the present disclosure

A further aspect of the present disclosure relates to a computer-implemented method for generating training data for a data model.

The method may comprise providing, by a processor, a plurality of generator models, wherein each generator model is configured to generate training data, wherein the training data comprises at least one quality parameter with a poor-quality value.

The method for generating training data may comprise selecting, by the processor, a first generator model of the plurality of generator models.

The method for generating training data may comprise generating, by the processor, training data by utilizing the selected first generator model.

The method for generating training data may comprise receiving initial data, wherein the initial data may be data that does not comprise, for the at least one quality parameter, a poor-quality value. In particular, the initial data may not comprise any poor-quality value for any quality parameter. Not comprising a poor-quality value is to be understood broadly and may entail not comprising intentionally added poor-quality value or may entail ideal data which has been selected so as to be free of any poor-quality values.

The method for generating training data may comprise choosing a random number. The random number may be used to select a generator model of the plurality of generator models. The random number may refer to a number generated by a random number generator. The random number may be an integer (e.g. 110).

The method for generating training data may comprise comparing the random number with a selection threshold and deriving a comparison result. The comparison result is to be understood broadly and may refer to any result indicating how the random number relates to the selection threshold, e.g., whether it equals, exceeds or is below the selection threshold. The selection threshold may be an integer (e.g. 100). The selection threshold may be predefined or set dynamically.

The method for generating training data may comprise selecting based on the comparison result, by the processor, either a second generator model of the plurality of generator models and generating further training data by utilizing the selected second generator model or generating further training data by utilizing the selected first generator model.

The selection threshold may be a hyper parameter configured to maintain a diversity of quality issues in data sets of the training data. The selection threshold may be manipulated manually or automatically.

The method for generating training data may comprise providing a time series data set. The method may comprise selecting at least one time slot of the time series data set by means of a user interface. The term time slot, as used herein, is to be understood broadly and may relate to a time window in the time series data set. The user interface, as used herein, is to be understood broadly and may relate to an interface configured to receive instructions, data or in general input from a user and to provide output to a user.

The method for generating training data may comprise intentionally modifying data in the selected time slot of the time series data set by an input received via the user interface. The input, e.g. received from the user, may comprise removing at least one value from the selected time slot. This means that the user replaces the at least one value with a null value. The input may comprise replacing the at least one value with bad quality data. Bad quality data may comprise perturbed data being out of a permissible value range (e.g. permissible value range may be defined between a minimum and a maximum). The input may comprise annotating the intentionally modified data with one or more quality labels. The labels may comprise expressions like outlier and/or missing data.

The user interface may provide to the user a plurality of data quality issues to be applied to data in the selected time slot. The term data quality issue, as used herein, is to be understood broadly and may relate to data with a poor quality. Data quality issues may comprise outliers, null values, drift and noise. The user may be able to select via the user interface one of the quality issues from the plurality data quality issues. The method may apply the selected quality issue to the data in the selected time slot.

The method may allow the user repeatedly intentionally modifying data in the selected time slot of the time series data. The repeatedly intentionally modifying may be carried out until the user stops it, e.g., when enough bad data is generated in the selected time slot.

The method for generating training data may comprise selecting randomly at least one time slot of the time series data set and presenting the selected at least one time slot to at least one user by means of the user interface.

The method for generating training data may comprise, based on at least one objective provided by at least one user, selecting intentionally at least one time slot of the time series data set and presenting the selected at least one time slot to the at least one user by means of the user interface. The at least one objective may comprise one or more of data augmentation, diverse and balanced quality issues, adding of stale data, repeated data, sensor calibration issues.

The method for generating training data may comprise selecting one or more time slots based on the objective provided by a user. The method may use a modified and biased version of reservoir sampling to add various types of stale data.

The method for generating training data may comprise receiving a user input to select a time slot by means of the user interface by snipping it from a univariate or multivariate trend in the time series data set. The method may comprise receiving user input to change a shape of the univariate trend and/or multivariate trend in order to modify the data in the time slot. The change of shape may comprise adding a spike or removing a section of data. The method may comprise providing to a user a plurality quality issues for selecting and applying to the time series data and/or the selected time slot. The method may comprise customizing types or classes of data quality issues, e.g., specifying the degree of noise that should be added to the data, by means of the user interface. The method may comprise providing a selection of typical data quality issues that are known to be often seen in an industrial domain.

A further aspect relates to a method for training a model to detect data quality issues. The method may be used in an industrial production process. The method may comprise providing a machine learning model configured to be trained to detect at least one quality issue. The machine learning model may, for example, be a classifier model. The method may comprise receiving training data, wherein the training data may comprise labels for good data and various data quality issues. The labels may for example comprise several classes (e.g. perfect, good, degraded, not okay). The method may comprise training the machine learning model with the received training data. The training data may be generated with one or more of the methods described above.

The method for training the model may comprise receiving data, also referred to hereinbelow as real data, from an industrial production process and determining the at least one quality issue by utilizing the trained classifier model and the received real data. The method may comprise providing the determined at least one quality issue. The machine learning model may be an autoencoder model configured to be trained to detect at least one quality issue. The machine learning model may comprise one or more autoencoder models, wherein the autoencoder model may be configured to detect one quality issue or to detect a plurality of quality issues. The method may comprise analyzing the at least one quality issue and providing an analyzing result. The analyzing result may be executed for one or more time slots comprising the quality issue or for a part of the real data or for the entire real data. The analyzing may comprise checking at least one of the following: multiple consecutive timestamps of data are missing, number of missing data are above a threshold, value out of range, extreme value, repetitive extreme value, number of extremely high or low values, change in mean (or another statistic) between subsets of timeslots (i.e. window data), a pattern (e.g. every 4^{th} value is missing, which can indicate a systematic instrument failure), pattern of data quality issues between same timestamped windows of data for multiple variables. The analyzing may comprise for a plurality of time slots checking one of the following: detecting a trend or a drift (e.g. caused by degrading of a calibration of a sensor), change of level of data quality (e.g. a sensor data may have a certain level of completeness here 95% und suddenly a drop to 80% occurs), change of mean or another statistic. The method may optionally comprise recording the analyzing result in a database. The method may optionally comprise visualizing the analyzing result to a user by means of a user interface.

A further aspect relates to a system for monitoring data quality, comprising a means configured to carry out the method for generating training data for data model and/or to carry out the method for training a model to detect data quality issues. The system may be configured to configure data quality metrics and quality thresholds for new data sets. The term quality metric is to be understood broadly and may for example refer to a quality parameter. The system may comprise a dashboard configured to allow for monitoring the data quality for the given data sets, as preconfigured by the user. The term data set may relate to input data. The system may be configured to raise alarms (e.g. as an automatic email sent to the user) when given data quality thresholds are exceeded.

Any disclosure and embodiments described herein relate to the methods, the systems, the devices, the computer program element lined out above and vice versa. Advantageously, the benefits provided by any of the embodiments and examples equally apply to all other embodiments and examples and vice versa.

As used herein "determining" also includes "initiating or causing to determine", "generating" also includes "initiating or causing to generate" and "providing" also includes "initiating or causing to determine, generate, select, send or receive". "Initiating or causing to perform an action" includes any processing signal that triggers a computing device to perform the respective action.

### BRIEF DESCRIPTION OF THE DRAWINGS

In the following, the present disclosure is described exemplarily with reference to the enclosed figures, in which
- **Figure 1**: shows a schematic view of a method for determining a quality result for input data of a data model according to an embodiment;
- **Figure 2**: shows a schematic view of device for determining a quality result for input data of a data model according to an embodiment;
- **Figure 3**: shows a schematic view of a method for determining a quality result for input data of a data model according to an embodiment;
- **Figure 4a**: shows a schematic of view of a part of a method for generating training data for a data model according to an embodiment;
- **Figure 4b**: shows a schematic of view of a part of a method for generating training data for a data model according to an embodiment;
- **Figure 5**: shows a schematic of view of a part of a method for training a model to detect data quality issues according to an embodiment;
- **Figure 6**: shows a schematic of view of a part of a method for determining quality issues according to an embodiment;
- **Figure 7**: shows a schematic of view of a part of a method for determining quality issues according to an embodiment.

### DETAILED DESCRIPTION OF EMBODIMENTS

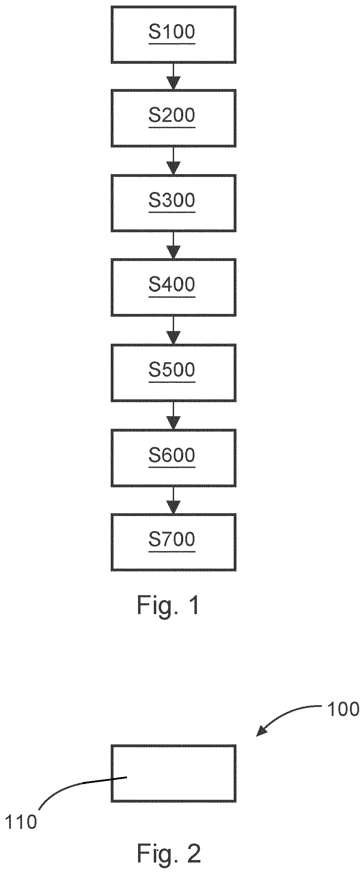

Figure 1 shows a schematic view of a method for determining a quality result for input data of a data model.

Step S100 comprises providing, by a processor, a data model trained to describe a relation between input data and output data (S100). In the present example the processor is part of a control system in a plant. The data model is trained to describe an industrial process, e.g. a cutting process of a machine tool. The data model may be a machine learning model but is not limited to this. The input data may comprise among others as one input parameter e.g. temperature data which is measured at different positions of the machine tool. The output data may comprise among others a displacement of a subunit of a machine part of the machine tool. The processor may be embedded in the control of the machine tool.

Step S200 comprises determining, by the processor, at least one quality threshold for at least one quality parameter for at least one input parameter of the input data. The at least one quality parameter may be one of completeness, accuracy, reliability, relevance and timeliness. In the present example the at least on quality parameter may be the completeness. Determining the at least one quality threshold may comprise a sensitivity analysis of the data model regarding the at least one quality parameter. Determining the at least one quality threshold may comprise intentionally changing a quality value of the at least one quality parameter of the at least one input parameter of the input data and determining an effect of the intentionally changing on a performance metric of the data model based on at least one output parameter of the output data. The determining the at least one quality threshold may be done during the sensitivity analysis after the data model is trained. The determining the at least one quality threshold may also be carried out instead of or additionally during the training phase of the data model. The determining may be carried before an execution of the data model. In the present example the determined quality threshold for the quality parameter completeness may be 90%.

Step S300 comprises obtaining, by the processor, input data for the data model, wherein the input data comprises the at least one input parameter. The obtaining is carried out during execution of the data model, in the present example during the operation of the machine tool. The input data comprises, in the present example, a temperature of a temperature sensor arranged in the machine tool as an input parameter. The data of the temperature is transmitted to the processor by means of a bus or a wired data connection or wireless data connection or the like.

Step S400 comprises determining, by the processor, at least one quality value for the at least one quality parameter for the at least one input parameter. The determining the at least one quality value may be done by analyzing the data set of the input parameter regarding the quality parameter using data quality metrics and data quality analyzing algorithms. In the present example the quality value of the quality parameter completeness may be 85%.

There are various ways for determining/analyzing/measuring the quality of the input data. For example, determining quality of the input data may comprise measuring completeness. This may comprise performing (simple) tests such as counting NaN, values that stay constant over time, etc. Determining quality of the input data may comprise detecting outliers. To do so, one can use Hempel outlier. Determining quality of the input data may comprise detecting change in the data distributions. To detect change in the data distributions, one can perform KS-test (Kolmogorov-Smirnov test), Mann-Whitney U tests. Determining quality of the input data may comprise detecting noise. There are different ways to detect noise in data such as autocorrelations, e.g. to see if they are zero with all the lags, LoF (local outlier factor) method, Loop outlier method, or model-based methods like autoencoders in data. Determining quality of the input data may comprise analyzing an amount of data quality issues in the data. This may comprise counting missing values, outliers, frozen values, dead signals.

Step S500 comprises comparing, by the processor, the determined at least one quality value with the determined at least one quality threshold and deriving a quality result (S500). In the present example, the determined quality value (here 85%) falls below the determined quality threshold (here 90%). The corresponding quality result comprises in the present example the determined quality value (here 85% of the quality parameter completeness of the input parameter temperature) the determined quality threshold (here 90% of the quality parameter completeness of the input parameter temperature). The quality result comprises further information indicating that the quality value is too bad regarding the quality threshold.

Step S600 comprises providing the quality result. The quality result may be displayed to a user responsible for a system monitored or controlled with the data model. The quality result may be provided in the form of a table. The quality result may be sent to portable device (e.g. mobile phone, tablet etc.) of a user (e.g. person responsible for process or system). In case the at least one determined quality value is below the at least one quality threshold an alert may be provided to a user and/or the execution of the data model may be interrupted.

Figure 2 shows a schematic view of device for determining a quality result for input data of a data model. The device comprises a means 100 for carrying out the steps of the method described above. The means 100 is in present example a Central Processing Unit (CPU) implemented in the control of the machine tool.

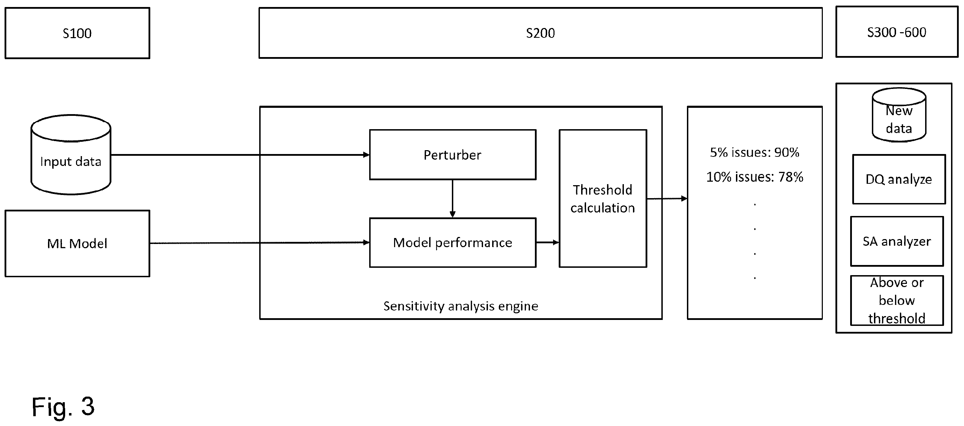

Figure 3 shows a schematic view of a method for determining a quality result for input data of a data model, where data flows are also indicated, according to the present disclosure.

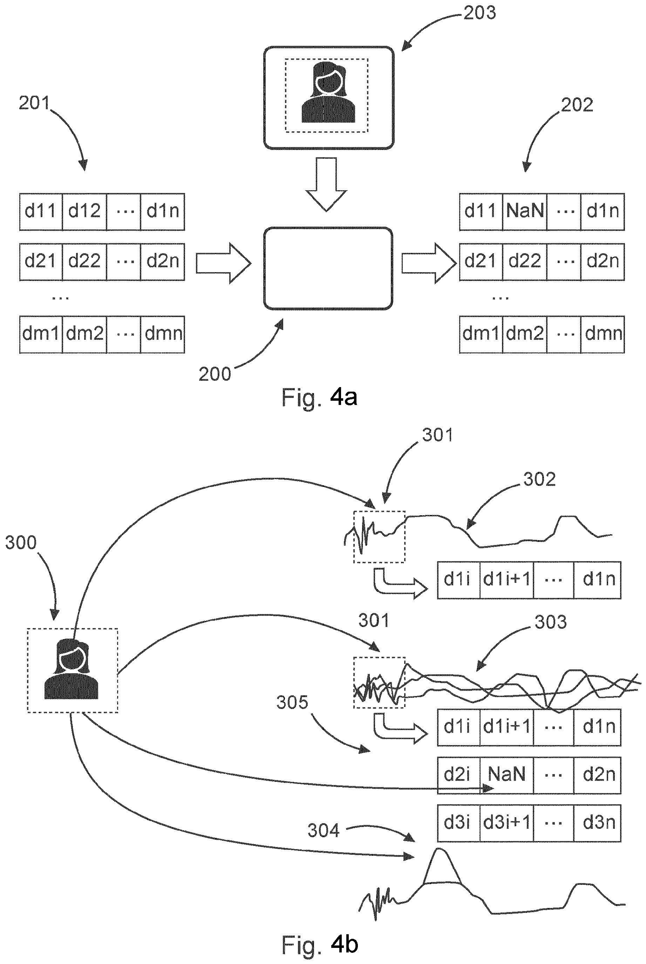

Figure 4a shows a schematic view of a part of a method according to an aspect of the present disclosure. The method is used for generating training data for a data model. The method comprises providing, a plurality of generator models 200, wherein each generator model is configured to generate training data 202, wherein the training data comprises at least one quality parameter with a poor-quality value. The method may comprise selecting a first generator model of the plurality of generator models 200. The method may comprise generating training data 202 by utilizing the selected first generator model. The method may comprise receiving initial data 201, wherein the initial data 201 may not comprise any poor-quality value for any quality parameter. The method may further comprise selecting at least one time slot of the time series data set by means of a user interface 203. The input from the user may comprise removing at least one value from the selected time slot. This means that the user replaces the at least one value with a null value. The input may comprise replacing the at least one value with bad quality data.

Figure 4b shows a schematic of view of a part of a method for generating training data for data model according to aspect of the present disclosure. The method may allow a user to select a time slot 301 by means of the user interface 300 by snipping it from a univariate trend 302 or multivariate trend 303 in the time series data set. The method may allow the user to change a shape of the univariate trend 302 and/or multivariate trend 303 in order to modify the data in the time slot 301. The change of shape may comprise adding a spike 304 or removing a section of data 305. The method may provide to a user a plurality quality issues for selecting and applying them to the time series data and/or the selected time slot. The user may manipulate in general the data in the selected time slot.

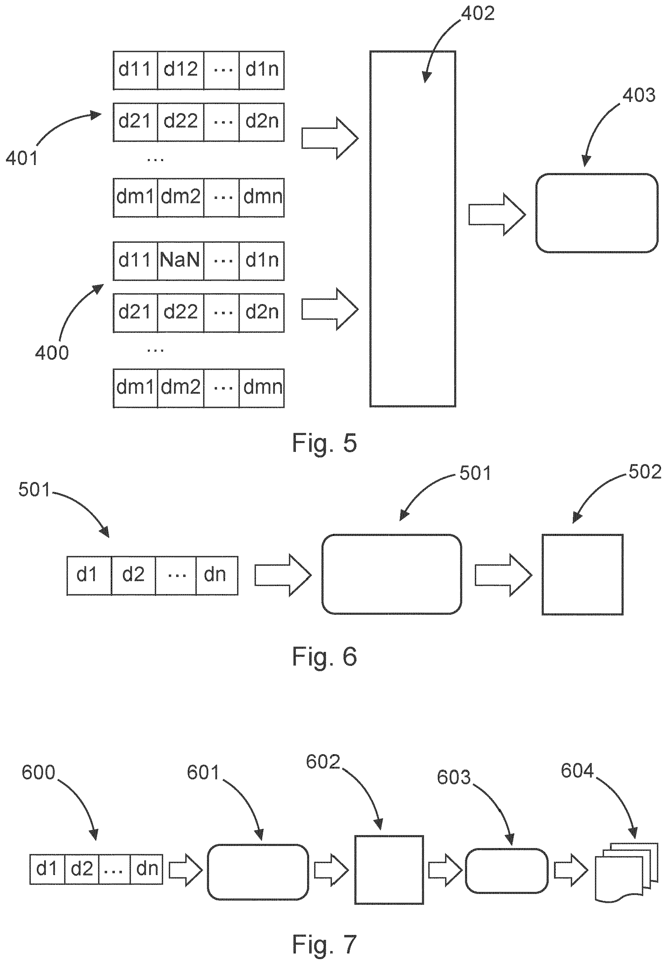

Figure 5 shows a schematic view of a part of the method for training a model to detect data quality issues according to an aspect of the present disclosure. The method may comprise receiving initial data 401. The method may comprise training data 400, wherein the training data is generated as described in Figure 4b. The training/test data 400 may comprise labels for good data and various data quality issues. The labels may for example comprise several classes (e.g. perfect, good, degraded, not okay). The method may comprise training 402 the machine learning model with the received training/test data 400 and/or the initial data 401. The method provides as a result the trained machine learning model 403. The machine learning model may be a classifier model.

Figure 6 shows a schematic view of a part of the method for determining quality issues according to an aspect of the present disclosure. The method may, optionally further, comprise receiving real data 500 from an industrial production process and determining the at least one quality issue by utilizing the trained classifier model 501 and the received real data 500. The method may further comprise providing the determined at least one quality issue 502.

Figure 7 shows a schematic view of a part of the method for determining quality issues according to an aspect of the present disclosure. The method may comprise receiving real data 600 and determining the at least one quality issue by utilizing the trained classifier model 601 and the received real data. The method may further comprise providing the determined at least one quality issue 602. The method may further comprise analyzing 603 the at least one quality issue and deriving an analyzing result 604. The method may further comprise providing an analyzing result 604. The analyzing 603 may be executed for one or more time slots comprising the quality issue or for a part of the real data or for the entire real data. The analyzing may comprise checking at least one of the following multiple consecutive timestamps of data are missing, number of missing data are above a threshold, value out of range, extreme value, repetitive extreme value, number of extremely high or low values, change in mean (or another statistic) between subsets of timeslots (i.e. window data), a pattern (e.g. every 4^{th} value is missing, which can indicate a systematic instrument failure), pattern of data quality issues between same timestamped windows of data for multiple variables. The analyzing may comprise for a plurality of time slots checking one of the following detecting a trend or a drift (e.g. caused by degrading of a calibration of a sensor), change of level of data quality (e.g. a sensor data may have a certain level of completeness here 95% und suddenly a drop to 80% occurs), change of mean or another statistic. The method may further comprise recording the analyzing result in a database. The method may further comprise visualizing the analyzing result to a user by means of a user interface.

In the following, a summary of the main effects and main advantages of the present disclosure is provided:
There is a key issue in DQ monitoring. When a model makes a prediction, questions concerning reliability of the prediction and potential impairments by bad data quality arise. Measurement of the data quality and assumption that it had no negative influence on the model prediction in case the data quality is good are possible approaches. But if the data quality is only 90%, the question whether this is good enough might arise. To overcome this issue, the following pipeline for data quality monitoring is proposed. A basic idea is to measure the sensitivity of the model to data quality issues during training of the model. This can be achieved by applying concepts similar to explainable Al (XAI). When the model is trained, the training data or test data quality is perturbated and the perturbated data is given to the trained model for model testing. The question is, to what extent the perturbated data leads so the model to change its prediction, e.g., to predict a different class. If the predicted class does not change, we can say that it was robust towards the data quality issues. However, if the predicted class does change, we can say that the data quality issues that were introduced where reason to lead to false model predictions. The level of data quality that is just acceptable enough for the model to still lead to true predictions can be captured as acceptable data quality "thresholds".

For different types of data quality metrics, such as "completeness", there could be data perturbators implemented, and different data quality thresholds could be found.

When machine learning models are deployed, they may need to be deployed along with additional files such as the data scaler that was using for scaling the training data. Various data quality thresholds that were found during the data quality sensitivity analysis during model training are saved and deployed.

Then, during model application, new data samples can be measured again for their data quality with the help of data quality metrics. However, when the measured data quality changes, alerts to the user are only raised if the data quality exceeds the acceptable thresholds. A possible scenario, where a given model is e.g. very robust towards data noise, the measured level of noise may have increased significantly from 5% to 15%. However, as the acceptable threshold of noise is at 20%, the solution will not raise an alert to the user in this case, because in this case there is no need to warn the user if the model still does what it should do.

In the case when an alert was raised, it would be also possible to "explain" to the user which data quality issue was the reason, by showing which data quality metric was exceeded. This is different of showing the measures of different metrics as done today, because the model sensitivity behaves differently towards different metrics.

Additional benefits of the proposed approach are that it allows to make assumptions on the model performance even when there is no ground truth, because we could still say with the help of the thresholds that the model prediction is probably false, due to bad data quality (and not due to the ground truth). Typically there is no ground truth, so this gives you some extent to better deal with this issue (at least to the extent that we can exclude false predictions due to bad data).

In the following, a summary of the main effects and main advantages of the "Further aspects of the present disclosure" particularly relating to a data model that allows for data quality determination, is provided:
Machine learning models depend on good data quality in order to make good predictions. In industrial applications, that data is typically multivariate time series data recorded from multiple sensors in the plant. The monitoring of this data quality is essential. Measuring data quality can be done with the help of data quality metrics that can be mathematical formulas. However, defining such metrics and adding thresholds to invoke alerts for specific applications/domains is cumbersome. On the other hand, ML models that do not depend on such threshold heuristics can be used for alerting for such issues, which is reflected in aspects of the present disclosure.

For the generation of low-quality examples, the solution has a list of data quality dimensions for time series data that is of relevance in the given industrial domain. For each data quality dimension there is an algorithm that can add data quality issues to a given new time series data set. For example, an algorithm for the data quality dimension "completeness" adds a pattern of null values (in python, so-called "NaNs") to a given time series. For a given data set from the customer, these algorithms for various dimensions can be applied, which creates a synthetic data set that contains the various generated data quality issues.

To monitor data quality issues, a machine learning model is used, which is trained with the given low-quality data examples. Once the model is trained, it is applied to the data that should be monitored. The model recognizes data quality issues based on the data quality issues it had learned in the training data.

Typically, industrial sensor time-series data may contain various types of data quality issues such as NaNs, values out of range, class imbalance. In an industrial loT system, these issues typically stem from technical issues at the sensor (e.g. a bad calibration of the sensor can lead do degrading data quality from that sensor), the transmission of data from the sensor (e.g. in case of wireless sensors heavy rain or other environmental issues could lead to a short signal loss which could lead to temporary data loss), or the data quality issues at the collection of the sensor data in the data sink (i.e. the loT cloud system or the edge where the sensor data comes together and is stored. Here data quality issues can occur e.g. when two different sensors use two different units of measure). These need to be identified and isolated for treatment to maintain robust model prediction performance.

### REFERENCE SIGNS

- S100: providing, by a processor, a data model trained to describe a relation between input data and output data
- S200: determining, by the processor, at least one quality threshold for at least one quality parameter for at least one input parameter of the input data
- S300: obtaining, by the processor, input data for the data model, wherein the input data comprises the at least one input parameter
- S400: determining, by the processor, at least one quality value for the at least one quality parameter for the at least one input parameter of the input data
- S500: comparing, by the processor, the determined at least one quality value with the determined at least one quality threshold and deriving a quality result
- S600: providing the quality result

- 100: device
- 110: means
- 200: plurality of generator models
- 201, 401: initial data
- 202, 400: training/test data
- 203, 300: user interface
- 301: time slot
- 302: univariate trend
- 303: multivariate trend
- 304: spike
- 305: data section removal
- 402: training phase
- 403: trained machine learning model
- 500, 600: real data
- 501, 601: classifier model
- 502, 602: quality issue
- 603: analyzing phase
- 604: analyzing result

## Claims

1. Computer implemented method for determining a quality result for input data of a data model, comprising:
providing, by a processor, a data model trained to describe a relation between input data and output data (S100);
determining, by the processor, at least one quality threshold for at least one quality parameter for at least one input parameter of the input data (S200);
obtaining, by the processor, input data for the data model, wherein the input data comprises the at least one input parameter (S300);
determining, by the processor, at least one quality value for the at least one quality parameter for the at least one input parameter of the input data (S400);
comparing, by the processor, the determined at least one quality value with the determined at least one quality threshold and deriving a quality result (S500); and
providing the quality result (S600).

2. The method according to claim 1,
wherein determining the at least one quality threshold comprises a sensitivity analysis of the data model regarding the at least one quality parameter.

3. The method according to claim 1 or 2,
wherein determining the at least one quality threshold comprises intentionally changing a quality value of the at least one quality parameter of the at least one input parameter of the input data and determining an effect of the intentionally changing on a performance metric of the data model based on at least one output parameter of the output data.

4. The method according to claim 3, wherein the intentionally changing a quality value is based on an algorithm configured to adapt values of the at least one input parameter in order to set a certain quality value of the at least one quality parameter of the at least one input parameter of the input data.

5. The method according to any one of the preceding claims, wherein the at least one quality parameter is one of completeness, accuracy, reliability, relevance and timeliness.

6. The method according to any one of the preceding claims, further comprising providing, by the processor, an alert in case the at least one determined quality value is below the at least one quality threshold.

7. The method according to any one of the preceding claims, further comprising determining, by the processor, by utilizing the data model and the obtained input data, output data.

8. The method according to any one of the preceding claims, wherein the quality result comprises the at least one determined quality value and the at least one determined quality threshold.

9. The method according to any one of the preceding claims, wherein the at least one quality parameter comprises two or more quality thresholds.

10. The method according to any one of the preceding claims, wherein the input data comprises a plurality of input parameters.

11. The method according to any one of the preceding claims, wherein the input data comprises physical data relating to the environment of an industrial process.

12. The method according to any one of the preceding claims, further comprising adding a further quality parameter for the at least one input parameter of the input data and determining a corresponding quality threshold for the quality parameter.

13. A device (100) for determining a quality result for input data of a data model, comprising: means (110) for carrying out the steps of the method according to claim 1.

14. Computer program comprising instructions that, when carried out by a computer, cause the computer to carry out the method according to any one of the claims 1 to 12.

15. Computer readable medium having stored thereon instructions that, when carried out by a computer, cause the computer to carry out the method according to any one of the claims 1 to 13.
